# EUROPÄISCHE PATENTSCHRIFT

(11) **EP 2 153 710 B1**
(45) Veröffentlichungstag und Bekanntmachung des Hinweises auf die Patenterteilung: **31.10.2012**
(21) Anmeldenummer: 09165983.9
(22) Anmeldetag: 21.07.2009
(51) Int. Cl.: A01C 23/00, A01M 7/00

(54) **Landwirtschaftliche Feldspritze und Verfahren zum Betreiben einer solchen Feldspritze**
Agricultural sprayer and method for operating the same
Pulvérisateur agricole et procédé de fonctionnement correspondant

(30) Priorität: 11.08.2008 DE 102008041159
(43) Veröffentlichungstag der Anmeldung: 17.02.2010
(73) Patentinhaber: Deere & Company, Moline, IL 61265-8098 (US)
(72) Erfinder: Hahn, Klaus, 68199 Mannheim (DE); Eberbach, Heiko, 74925, Epfenbach (DE); Hirschpek, Ralf, 68239, Mannheim (DE); Peeters, Willy, 5825 CD, Overloon (NL); Lorentzen, Robert, Bondurant, IA 50035 (US); Klemme, Kent A, Ankeny, IA 50021 (US)
(74) Vertreter: Holst, Sönke

(56) Entgegenhaltungen:
- EP-A1- 0 569 252
- US-A- 4 553 702
- US-A- 5 004 155
- US-A1- 2002 071 916

## Beschreibung

Die Erfindung betrifft eine Landwirtschaftliche Feldspritze mit einem Tank, zur Aufnahme von Spritzflüssigkeit, einem Spritzengestänge zum Ausbringen von Spritzflüssigkeit, wobei das Spritzengestänge in mehrere Teilbreiten (Sektionen) unterteilbar ist, die über Steuerventile (Teilbreitenventile) wahlweise in einen zugeschalteten oder abgeschalteten Betriebszustand bringbar sind, einer Pumpe zum Fördern von Spritzflüssigkeit, einer den Tank mit der Pumpe verbindenden Zuführleitung, einer die Pumpe mit dem Tank verbindenden Rückführleitung und einer die Pumpe mit dem Spritzengestänge verbindenden Spritzleitung, wobei die Rückführleitung und die Spritzleitung jeweils mit wenigstens einem elektrisch ansteuerbaren Steuerventil versehen sind und ferner ein elektronisches Steuersystem vorgesehen ist. Ferner betrifft die Erfindung ein Verfahren zum Betreiben einer landwirtschaftlichen Feldspritze.

Es sind landwirtschaftliche Feldspritzen bekannt, bei denen die zum Fördern von Spritzflüssigkeit eingesetzten Pumpen mechanisch oder hydraulisch angetrieben werden. Bei gezogenen Spritzen erfolgt dies beispielsweise durch die an einem Traktor vorgesehene Zapfwelle oder über Hydraulikmotoren. Derartig angetriebene Pumpen werden üblicherweise mit konstanter Pumpendrehzahl betrieben, woraus konstante Fördermengen resultieren. Über Beipassventile werden die Fördermengen bzw. Durchflussraten variiert, um die für eine bestimmte Anwendung erforderliche Durchflussrate, in Abhängigkeit von einer Spritzengestängebreite bzw. einer Teilbreiteneinstellung oder einer gewählten Fahrgeschwindigkeit oder einer gewünschten Ausbringmenge an Spritzflüssigkeit, einzustellen. Neben dem eigentlichen Ausbringen von Spritzflüssigkeit, also dem Spritzen, wird der durch die Pumpe erzeugte Durchfluss bzw. Volumenstrom auch zum Umwälzen des Tankinhalts genutzt, um eine andauernd gleichmäßige Konzentration von verwendetem Spritzmittel in der Spritzflüssigkeit zu gewährleisten. Je nach Art und Zusammensetzung des Spritzmittels kann sich dabei jedoch auch eine zu hohe Umwälzrate einstellen, was zum Aufschäumen der Spritzflüssigkeit führen kann, insbesondere wenn nur noch eine Restmenge an Spritzflüssigkeit im Tank enthalten ist. Ferner ist es üblich und wird teilweise auch gesetzlich gefordert, eine Reinigung der Feldspritze auf dem Feld durchzuführen und sowohl die Spritzflüssigkeitsreste im Tank als auch im Leitungssystem zu entfernen. Die Position der Pumpe spielt bei dem dabei erzielbaren Reinigungsgrad eine tragende Rolle, so dass eine möglichst tanknahe Positionierung der Pumpe von Vorteil ist. Meist werden jedoch aufgrund konstruktiver Einschränkungen, die herkömmliche zapfwellengetriebene Pumpenanordnungen mit sich bringen, nur unbefriedigende Reinigungsgrade erzielt.

In der US 2002/071916 A1 wird ein elektronisches Steuersystem und Verfahren für eine Feldspritze offenbart. Es ist vorgesehen, dass mehrere Steuerventile in Abhängigkeit der Fahrgeschwindigkeit der Feldspritze angesteuert werden, um insbesondere den Spritzdruck für eine zu versprühende Spritzflüssigkeit zu variieren. Die oben genannten Probleme können dabei nur teilweise überwunden werden.

Die der Erfindung zugrunde liegende Aufgabe wird darin gesehen, eine landwirtschaftliche Feldspritze der eingangs genannten Art anzugeben, durch welches die vorgenannten Probleme überwunden werden.

Die Aufgabe wird erfindungsgemäß durch die Lehre des Patentanspruchs 1 und 8 gelöst. Weitere vorteilhafte Ausgestaltungen und Weiterbildungen der Erfindung gehen aus den Unteransprüchen hervor.

Erfindungsgemäß wird eine landwirtschaftliche Feldspritze der eingangs genannten Art mit einem elektrischen Motor zum Antreiben der Pumpe versehen und das elektrische Steuersystem derart ausgebildet ist, dass der Motor und die Steuerventile in Abhängigkeit von der Fahrgeschwindigkeit der Feldspritze und des Betriebszustands der Teilbreiten (Sektionen) ansteuerbar sind, wobei der Motor bei Zuschalten einer Teilbreite (Sektion) in seiner Drehzahl erhöht oder bei Abschalten einer Teilbreite (Sektion) in seiner Drehzahl reduziert wird. Ferner ist es möglich, den Motor auch in Abhängigkeit von einer gewünschten Ausbringmenge, von einer aktiven Teilbreiteneinstellung bzw. Gestängebreite oder auch von einer gewünschten Durchmischungsrate anzusteuern. Dadurch, dass ein elektrischer Motor zum Antreiben der Pumpe in Kombination mit den genannten Steuerventilen in der Rückführ- und Spritzleitung eingesetzt wird, kann die erforderliche Durchflussrate an die verschiedenen sich einstellenden Betriebszustände in Abhängigkeit der Fahrgeschwindigkeit, also in Abhängigkeit eines fahrenden Zustands oder auch eines stehenden Zustands der landwirtschaftlichen Feldspritze, optimal und höchst variabel angepasst werden, ohne dass Beipassventile eingesetzt werden müssen. Die Ermittlung der Fahrgeschwindigkeit zu Steuerungszwecken kann dabei durch einen Geschwindigkeitssensor oder durch an dem Zugfahrzeug oder an der Feldspritze vorhandene Drehzahlsensoren generiert und von einer am Fahrzeug installierten Fahrzeugsteuerung registriert werden. Verschiedene Fahrzeugdaten oder Fahrzeugsignale, wie auch ein Fahrzeuggeschwindigkeitssignal oder ein Beschleunigungssignal können dann in üblicher und bekannter Weise zu Steuerzwecken abgerufen werden. Dadurch, dass ein Betreiben der Feldspritze unabhängig von der Zapfwelle eines Traktors ermöglicht wird, werden weitere Vorteile erzielt. So werden kleine Wendekreise realisierbar, da die Zapfwelle hier nicht mehr einschränkend wirkt. Ferner müssen Traktor und Feldspritze nicht mehr zwingend konstruktiv aufeinander abgestimmt werden. Des Weiteren entfallen aufwendige Wartungsmaßnahmen für eine zapfwellengetriebene Gelenkantriebswelle und nicht zuletzt gestalten sich auch die Möglichkeiten des Ankuppelns der Feldspritze an den Traktor wesentlich einfacher und komfortabler, insbesondere da einfachere Anhängekupplungen einsetzbar sind. Der Antrieb der Pumpe erfolgt aufgrund des Einsatzes eines elektrischen Motors unabhängig von einer mechanischen Kopplung an die Fahrgeschwindigkeit des Zugfahrzeugs, beispielsweise eines Traktors, so dass aufgrund von falschen Zapfwellengeschwindigkeiten verursachte Pumpendrehzahlüberschreitungen vermieden werden können. Ferner können Spritzentankfüllvorgänge bei niedrigerer Lehrlaufdrehzahl des Zugfahrzeugs erfolgen, da die Pumpenleistung nicht über die Zapfwelle abgerufen werden muss. Insgesamt ist auch eine höhere Effizienz zu erwarten, da stufenlos verstellbare Antriebsdrehzahlen realisierbar sind. Nicht zuletzt werden Vorteile in Bezug auf den Umwälzvorgang des Tankinhalts erzielt. Durch gezielte und genauere Anpassung der Durchflussraten für die verschiedenen Betriebszustände können Aufschäumungen der Spritzflüssigkeit im Tank vermieden bzw. reduziert werden. Ferner wird durch optimierte Anpassungen der Durchflussraten an den jeweiligen Leistungsbedarf des Spritzensystems der Leistungsverbrauch insgesamt reduziert, so dass insgesamt auch der Kraftstoffverbrauch des Zugfahrzeugs reduziert wird. Die Pumpe ist an ihrer Auslassöffnung vorzugsweise über eine Y-Verzweigung mit der Spritzleitung und der Rückführleitung verbunden, wobei die Steuerventile hinter der Y-Verzweigung positioniert werden. Das Spritzengestänge ist in mehrere Teilbreiten (Sektionen) unterteilbar, die über weitere Steuerventile (Teilbreitenventile) wahlweise in einen zugeschalteten oder abgeschalteten Betriebszustand bringbar sind, wobei der Motor und die Steuerventile ferner in Abhängigkeit des Betriebszustands der Teilbreiten (Sektionen) ansteuerbar sind. Dies ist sinnvoll, da bei breiteren Spritzengestängen bzw. wenn mehrere Teilbreiten des Spritzengestänges in Betrieb genommen werden, höhere Durchflussraten erforderlich sein können als bei schmaleren Spritzengestängen bzw. als wenn weniger Teilbreiten des Spritzengestänges in Betrieb genommen werden. Die Inbetriebnahme der einzelnen Teilbreiten des Spritzengestänges wird vorzugsweise über Steuerventile gesteuert, die am Spritzengestänge im Verlauf der Spritzleitung angeordnet sind und das Spritzengestänge in mehrere zuschaltbare und abschaltbare Teilbreiten unterteilen. Durch Ansteuerung dieser Steuerventile können die verschiedenen Teilbreiten oder Sektionen in Betrieb oder außer Betrieb genommen werden.

Vorzugsweise ist die Spritzleitung mit einem Druck- und/oder Durchflusssensor versehen, so dass der Motor und die Steuerventile ferner in Abhängigkeit von einem entsprechenden Druck- und/oder Durchflusssignal ansteuerbar sind. Die Anordnung des Druck- oder Durchflusssensors kann dabei in der Nähe des Steuerventils, jedoch dahinter, oder auch im weiteren Verlauf der Spritzleitung erfolgen, beispielsweise in der Nähe des Spritzengestänges.

Des Weiteren ist die Rückführleitung mit einem Druck- und/oder Durchflusssensor versehen, so dass der Motor und die Steuerventile ferner in Abhängigkeit von einem entsprechenden Druck- und/oder Durchflusssignal ansteuerbar sind wobei die Anordnung des Druck- oder Durchflusssensors ebenfalls hinter dem Steuerventil erfolgt. Die Druck- und/oder Durchflusssensoren liefern dem elektronischen Steuersystem, welches vorzugsweise eine prozessorgesteuerte Steuerung umfasst und über ein Speichersystem verfügt, entsprechende Sensorsignale, die entsprechend der im Speicher des Steuersystems abgelegten Algorithmen und Steuerdaten in Steuersignale für die Steuerventile umgesetzt werden. Zum Erreichen einer möglichst hohen Präzision des gesamten Systems sind vorzugsweise Durchflusssensoren einzusetzen. Diese sind jedoch in Bezug auf Robustheit und Kosten den einfacheren Drucksensoren unterlegen. Es ist jedoch auch möglich einen Durchflusssensor in der Spritzleitung vorzusehen und einen Drucksensor in der Rückführleitung, dies würde zu einem vorteilhaften Kompromiss in Bezug auf Präzision, Robustheit und Kosten führen.

Vorzugsweise ist die Spritzleitung mit einer weiteren Rückführleitung verbunden, durch welche die Spritzleitung mit dem Tank derart verbunden wird, dass eine Rückführung der durch die Spritzleitung geführten Spritzflüssigkeit in den Tank erfolgen kann, wobei ein Durchfluss von Spritzflüssigkeit durch die weitere Rückführleitung über ein weiteres Steuerventil steuerbar ist, und der Motor und die anderen Steuerventile ferner in Abhängigkeit des Drucks und/oder des Durchflusses in der weiteren Rückführleitung ansteuerbar sind. Durch die weitere Rückführleitung wird ein Rezirkulationssystem geschaffen durch welches nicht ausgebrachte Spritzflüssigkeit wieder zurück in den Tank befördert wird. Über das weitere Steuerventil kann der Grad der Rezirkulation, also der Anteil der Spritzflüssigkeit die nicht ausgebracht wird, reguliert bzw. gesteuert werden. Gleichzeitig kann dadurch auch der Druck in Spritzleitung variiert werden.

Vorzugsweise sind Eingabemittel vorgesehen, durch welche mehrere einstellbare Betriebsmodi für das elektronische Steuersystem einstellbar sind, wobei der Motor und die Steuerventile ferner in Abhängigkeit eines einstellbaren Betriebsmodus ansteuerbar sind. Das Eingabemittel kann beispielsweise einen Bordcomputer oder Eingabebildschirm umfassen oder auch als Schaltpult ausgebildet sein. Über das Eingabemittel kann eine Bedienperson verschiedene Steuerbefehle generieren bzw. verschiedene Betriebsmodi aktivieren. Den entsprechenden Steuerbefehlen oder Betriebsmodi werden dann jeweils unterschiedliche Steuerdaten und Steueralgorithmen, die in dem Speicher des elektronischen Steuersystems oder in einem anderen Speicher, beispielsweise in dem eines Bordcomputers, abgelegt sind, zugeordnet und von dem elektronischen Steuersystem zur Steuerung des Motors und der Steuerventile zu Grunde gelegt.

Vorzugsweise sind ein oder mehrere der Steuerventile als elektrisch verstellbare Drosselventile oder auch als Proportionalwegeventile ausgebildet. Die Ausbildung als elektrisch verstellbares Drosselventil oder Proportionalwegeventil ermöglicht eine nahezu stufenlose Verstellung der Durchflussraten und Drücke in den entsprechenden Leitungen, sei es in der Spitzleitung oder in den Rückführleitungen oder in einer sonstigen Leitung des Spritzensystems.

Durch das elektrische Antreiben der Pumpe kann diese unabhängig von der Position der Zapfwelle frei wählbar und damit nahe des Tanks bzw. des Tankbodens positioniert werden, so dass sich Vorteile bei der Reinigung des Systems einstellen, insbesondere auch, weil durch die vorteilhafte Positionierung der Pumpe weniger Restflüssigkeit im gesamten Spritzensystem verbleibt. Durch die verbesserte Positioniermöglichkeit der Pumpe werden auch im Spritzensystem vorhandene Druckverluste minimiert. Die Positionierung der Pumpe erfolgt vorzugsweise unterhalb des Tankbodens. Ferner ist eine Positionierung nahe der Tankauslassöffnung sowie im hinteren Bereich der Spritze nahe des Spritzengestänges von Vorteil, da dadurch insgesamt die Länge der Spritzleitung, der Rückführleitung für den Umwälzvorgang sowie anderer Leitungen, die zum Füllen, Rückführen und Reinigen benötigt werden, minimiert wird.

Ferner wird ein Verfahren vorgeschlagen mit dem die oben beschriebene Feldspritze betrieben werden kann. Die landwirtschaftliche Feldspritze umfasst einen Tank, zur Aufnahme von Spritzflüssigkeit, ein Spritzengestänge zum Ausbringen von Spritzflüssigkeit, eine Pumpe zum Fördern von Spritzflüssigkeit, einen den Tank mit der Pumpe verbindende Zuführleitung, eine die Pumpe mit dem Tank verbindende Rückführleitung und eine die Pumpe mit dem Spritzengestänge verbindenden Spritzleitung. Die Pumpe wird mittels eines elektrischen Motors angetrieben. Ferner sind die Rückführleitung und die Spritzleitung jeweils mit wenigstens einem elektrisch ansteuerbaren Steuerventil versehen sind und es ist ein elektronisches Steuersystem vorgesehen. Das Verfahren sieht ferner vor, dass der Motor und die Steuerventile in Abhängigkeit von der Fahrgeschwindigkeit der Feldspritze angesteuert werden. Das Verfahren sieht vor, dass das Spritzengestänge in mehrere Teilbreiten (Sektionen) unterteilbar ist, die durch Ansteuern weiterer Steuerventile (Teilbreitenventile) wahlweise in einen zugeschalteten oder abgeschalteten Betriebszustand gebracht werden, und der Motor und die Steuerventile ferner in Abhängigkeit des Betriebszustands der Teilbreiten (Sektionen) ansteuerbar sind, wobei der Motor bei Zuschalten einer Teilbreite (Sektion) in seiner Drehzahl erhöht oder bei Abschalten einer Teilbreite (Sektion) in seiner Drehzahl reduziert wird. Dadurch kann die Durchflussrate in der Spritzleitung entsprechend der außer Betrieb oder in Betrieb genommenen Teilbreiten des Spritzengestänges reduziert bzw. erhöht werden. Die sich daraus ergebenden Vorteile sind bereits oben dargestellt.

Das Verfahren sieht ferner vor, dass bei in Betrieb genommener Pumpe und bei Stillstand der landwirtschaftlichen Feldspritze, also wenn die Fahrgeschwindigkeit Null beträgt, das in der Rückführleitung vorgesehene Steuerventil geöffnet und das in der Spritzleitung vorgesehene Steuerventil geschlossen wird und der elektrische Motor der Pumpe sowie die Steuerventile, insbesondere das in der Rückführleitung vorgesehene Steuerventil, ferner in Abhängigkeit von der Art der Spritzflüssigkeit und/oder eines Füllstands des Tanks und/oder eines einstellbaren Zeitintervalls angesteuert werden. Das elektronische Steuersystem berücksichtigt dabei elektronische Steuersignale, die beispielsweise von den oben genannten Eingabemitteln erzeugt werden, wobei eine Bedienperson beispielsweise die Art des verwendeten Spritzmittels oder auch ein Zeitintervall eingeben kann, woraufhin entsprechende Steuersignale, in Verbindung mit auf in den Eingabemitteln oder in dem elektronischen Steuersystem hinterlegten Daten, generiert werden. Bei dem eingebbaren Zeitintervall kann es sich beispielsweise um ein Zeitintervall handeln, welches angibt wie lange ein Umwälzvorgang unterbrochen wird bzw. nach welcher Zeit der Umwälzvorgang wieder in Gang gesetzt wird, nachdem er unterbrochen wurde. Dazu ist das elektronische Steuerungssystem vorzugsweise mit einer Zeiterfassung ausgestattet. In Bezug auf den Füllstand des Tanks ist vorzugsweise wenigstens ein weiterer Sensor vorgesehen, der den Füllstand des Tanks überwacht und entsprechende Steuersignale generieren kann, die dem elektronischen Steuersystem als Steuergröße zugeführt werden. Ein derartiger Sensor ist im Stand der Technik bekannt. So können Pumpe und Steuerventile in Abhängigkeit der Fahrgeschwindigkeit betrieben bzw. angesteuert werden, also auch unter Berücksichtigung dessen, ob die landwirtschaftliche Feldspritze in Bewegung ist, und in Abhängigkeit anderer Faktoren wie Spritzmittelart, Füllstand des Tanks mit Spritzmittelflüssigkeit und Zeitangaben bzw. Zeitintervallangaben.

Das Verfahren sieht ferner vor, dass bei Beschleunigung der landwirtschaftlichen Feldspritze das in der Spritzleitung vorgesehene Steuerventil in Abhängigkeit von der Beschleunigung geöffnet wird und der Motor bei zunehmender oder abnehmender Fahrgeschwindigkeit mit zunehmender bzw. abnehmender Motordrehzahl betrieben wird. Dadurch wird ermöglicht, dass bei zunehmender Geschwindigkeit der landwirtschaftlichen Feldspritze das Steuerventil in der Spritzleitung zunehmend geöffnet wird und die Motordrehzahl und damit die Pumpleistung angehoben wird, um eine höhere Durchflussrate in der Spritzleitung zu erzielen bzw. bei abnehmender Geschwindigkeit der landwirtschaftlichen Feldspritze das Steuerventil in der Spritzleitung zunehmend geschlossen wird und die Motordrehzahl und damit die Pumpleistung abgesenkt wird, um die Durchflussrate in der Spritzleitung zu reduzieren. Vorzugsweise umfasst das Verfahren auch eine Ansteuerung des Motors bei weiterhin zunehmender Geschwindigkeit, wenn das Steuerventil in der Spritzleitung bereits vollständig geöffnet ist, dahingehend, dass dann die Durchflussrate durch eine entsprechend der Zunahme der Geschwindigkeit angepasste Erhöhung der Motordrehzahl und damit der Pumpleistung erhöht werden kann.

Vorzugsweise sieht das Verfahren vor, dass bei in der Spritzleitung vollständig geöffnetem Steuerventil das in der Rückführleitung vorgesehene Steuerventil ferner in Abhängigkeit der weiterhin zunehmenden oder abnehmenden Motordrehzahl geschlossen bzw. geöffnet wird. Dadurch wird erzielt, dass auch bei weiterhin ansteigender oder abfallender Durchflussrate in der Spritzleitung die Umwälzrate für die sich im Tank befindliche Spritzflüssigkeit unabhängig davon gesteuert und beispielsweise konstant gehalten oder gar reduziert oder erhöht werden kann.

Das Verfahren sieht ferner vor, dass die Spritzleitung mit einer weiteren Rückführleitung verbunden ist, durch welche die Spritzleitung mit dem Tank derart verbunden wird, dass eine Rückführung der durch die Spritzleitung geführten Spritzflüssigkeit in den Tank erfolgen kann, wobei ein Durchfluss von Spritzflüssigkeit durch die weitere Rückführleitung über ein weiteres Steuerventil gesteuert wird, wobei der Motor und die Steuerventile ferner in Abhängigkeit des Durchflusses in der weiteren Rückführleitung angesteuert werden, wobei Eingabemittel vorgesehen sind, durch welche mehrere einstellbare Betriebsmodi für das elektronische Steuersystem einstellbar sind und wobei der Motor und die Steuerventile ferner in Abhängigkeit eines einstellbaren Betriebsmodus ansteuerbar sind. So sind Betriebsmodi wie z.B. Tankfüllmodus, Spülmodus, Spritzmodus, Umwälzmodus, Rezirkulationsmodus oder Außerbetriebsmodus wählbar, wobei den verschiedenen Betriebsmodi bestimmte voreinstellbare Steuergrößen für Drehzahl und Öffnungs- oder Schließgrad für die Steuerventile zugeordnet sind und die von dem elektronischen Steuersystem automatisch in entsprechende Steuersignale umgesetzt werden.

Vorzugsweise sieht das Verfahren vor, dass die Betriebsmodi einen Tankfüllmodus und/oder einen Spülmodus umfassen, wobei bei Einstellen des Tankfüll- oder Spülmodus von dem elektronischen Steuersystem ein voreinstellbarer Drehzahlwert für die Motordrehzahl vorgegeben und das in der Rückführleitung vorgesehene Steuerventil geschlossen wird und wobei das in der Spritzleitung vorgesehene Steuerventil zur Einstellung eines vorgebbaren Spüldrucks in der Spritzleitung bzw. in dem Spritzengestänge ansteuerbar ist, so dass beispielsweise der Spüldruck auch unterhalb eines Drucks gehalten wird, der die am Spritzengestänge angeordneten Spritzdüsen öffnen würde.

Die oben beschriebenen Merkmale einer landwirtschaftlichen Feldspritze sowie das Beschriebene Verfahren zum Betreiben einer solchen gelten sowohl für angehängte, also von einem Schlepper gezogene Feldspritzen, als auch für selbstfahrende Feldspritzen. Ferner sollen hier auch sogenannte, an einem Zugfahrzeug angebaute, Anbauspritzen berücksichtigt und mit den genannten Merkmalen und Verfahrensschritten vereinbar sein.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Seitenansicht einer erfindungsgemäßen landwirtschaftlichen Feldspritze und
- Fig. 2: einen schematischen hydraulischen Schaltplan der in Figur 1 dargestellten landwirtschaftlichen Feldspritze.

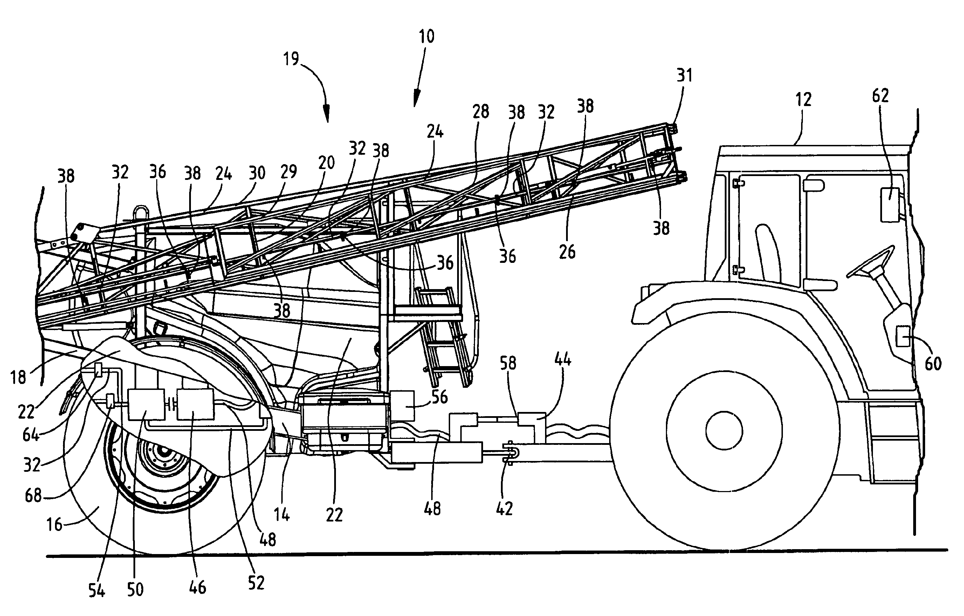

Figur 1 zeigt eine landwirtschaftliche Feldspritze 10 in Form von einer von einem Schlepper 12 gezogenen Anhängespritze. Es sei jedoch darauf hingewiesen, dass die folgende Figurenbeschreibung nur beispielhaft auf eine Anhängespritze ausgerichtet ist. Ebenso könnte hier auch eine selbstfahrende Feldspritze oder einer Anbauspritze Anwendung finden. Die Spritze 10 weist einen Rahmen 14 mit Rädern 16 auf. An den Rahmen 14 ist ein Parallelogrammgestänge 18 montiert, an welches sich eine Spritzenvorrichtung 19 anschließt. Die Spritzenvorrichtung 19 umfasst ein Spritzengestänge 20. Ferner ist die Spritze 10 mit einem am Rahmen 14 montierten Tank 22 versehen.

Das Spritzengestänge 20 weist obere und untere Träger 24, 26 auf, die über zahlreiche Verstrebungen 28 miteinander verbunden sind und ein Fachwerk bilden. Das Spritzengestänge 20 setzt sich aus mehreren Teilbreiten 29, 29', 30, 30' zusammen, die über Scharniere 31 miteinander verbunden sind und sich beidseitig der Spritze 10 erstrecken. Durch die Scharniere 31 kann das Spritzengestänge 20 in eine Transportstellung zusammengefaltet (wie in Figur 1 dargestellt) oder in eine Betriebsstellung auseinandergefaltet werden.

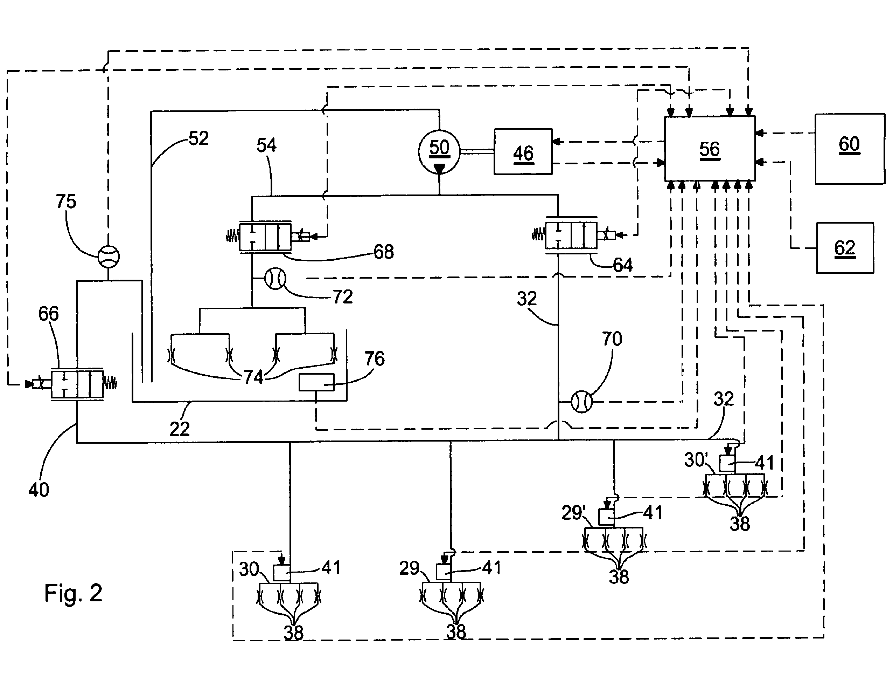

Das Spritzengestänge 20 ist mit einer Spritzleitung 32 versehen, die sich beidseitig der Spritze 10 entlang des Spritzengestänges 20 erstreckt. Die Spritzleitung 32 ist wenigstens teilweise als Rohr ausgebildet, das mit Austrittsöffnungen 36 versehen ist, an denen Spritzdüsen 38 angeschlossen sind. Die Spritzleitung 32 ist mit einer Rückführleitung 40 verbunden (siehe Figur 2), die eine nicht ausgebrachte (nicht versprühte) Spritzflüssigkeit rezirkulierend aus der Spritzleitung 32 zurück zum Tank 22 leitet.

Die Teilbreiten 29, 29', 30, 30' des Spritzengestänges 20 sind über sogenannte als Schließventile ausgebildete Teilbreitenventile 41, die vor den Spritzdüsen 38 in der Spritzleitung 32 angeordnet sind, zu- bzw. abschaltbar, so dass wahlweise die gesamte Breite des Spritzengestänges 20 oder eben nur einzelne Bereiche, sogenannte Teilbreiten 29, 29', 30, 30' des Spritzengestänges 20 in bzw. außer Betrieb genommen werden können.

Die Spritze 10 ist über eine Anhängekupplung 42 mit dem Schlepper 12. Ferner ist an dem Schlepper 12 eine Stromversorgungsschnittstelle 44, vorzugsweise für eine Drehstromversorgung vorgesehen, an die ein elektrischer Motor 46, vorzugsweise ein Drehstrommotor, über eine entsprechende Kabelversorgung 48 angeschlossen ist. Der Motor 46 ist mit einer Pumpe 50 verbunden und treibt diese an. Die Pumpe 50 ist vorzugsweise als Kolben-Membranpumpe ausgebildet, sie kann jedoch auch als eine andere Art von Membranpumpe oder auch als einfache Kolbenpumpe oder als Zentrifugalpumpe ausgebildet sein.

Die Pumpe 50 ist über eine Zuführleitung 52 mit dem Tank 22 verbunden, wobei die Zuführleitung eine Pumpeneingangs- oder Ansaugleitung darstellt. Ferner ist die Pumpe 50 ausgangsseitig mit einer Rückführleitung 54 sowie mit der Spritzleitung 32 verbunden, wobei die Rückführleitung 54 von der Pumpe 50 zurück in den Tank 22 führt und ein Umwälzen der im Tank 22 befindlichen Spritzflüssigkeit ermöglicht, so dass die im Tank 22 befindliche Spritzflüssigkeit über die Pumpe 50 und die Rückführleitung 54 die Möglichkeit hat zu zirkulieren bzw. ein Umwälzen der Spritzflüssigkeit erfolgen kann.

Ferner ist ein elektronisches Steuersystem 56 vorgesehen, welches Steuergrößen zur Ansteuerung des Motors 46 generiert. Das Steuersystem 56 ist vorzugsweise an der landwirtschaftlichen Feldspritze 10 positioniert, könnte jedoch gleichbedeutend auch an dem Schlepper 12 angeordnet sein. Über eine entsprechende Schnittstelle 58, beispielsweise einem CANBUS-System ist das elektronische Steuersystem 56 mit dem Schlepper 12 bzw. mit einem am Schlepper 12 vorgesehenen Bordcomputer bzw. einer dort installierten Fahrzeugsteuerung 60 verbunden. Damit ist ein Datenaustausch von Fahrzeugdaten wie Antriebsmotordrehzahl, Fahrzeuggeschwindigkeit, Übersetzungsdaten des Getriebes bzw. Getriebestrangs oder des Antriebsstrang, sowie Beschleunigungsdaten etc., zwischen Fahrzeugsteuerung und elektronischem Steuersystem der Spritze 10 zu Steuerzwecken möglich.

Ferner ist im Schlepper 12 ein Eingabemodul 62 vorgesehen, welches als Eingabemittel dient, über das eine Bedienperson weitere Steuerdaten für die Spritze 10 eingeben kann oder in dem andere gespeicherte Daten aufgerufen und von dem elektronischen Steuersystem 56 zu Steuerzwecken abgerufen werden können.

Die Spritzleitung 32, die Rückführleitung 40 sowie die Rückführleitung 54 ist jeweils mit einem elektrisch ansteuerbaren Steuerventil 64, 66, 68 versehen, die ebenfalls mit dem elektronischen Steuersystem 56 in Verbindung stehen und von diesem angesteuert werden. Die Steuerventile 64, 66, 68 sind dabei vorzugsweise als elektrisch ansteuerbares bzw. verstellbares Drosselventil oder auch als Proportionalwegeventil bzw. Proportionalsteuerventil ausgebildet. Stromabwärts des Steuerventils 64 in der Spritzleitung 32 ist ein Drucksensor oder Durchflusssensor 70 bzw. Volumenstromsensor angeordnet, vorzugsweise nahe des Steuerventils 64, jedoch vor den Teilbreitenventilen 41.

Stromabwärts des Steuerventils 68 in der Rückführleitung 54 ist ein weiterer Drucksensor oder Durchflusssensor 72 angeordnet, vorzugsweise nahe des Steuerventils 68. Hinter dem Durchflusssensor 72 endet die Rückführleitung 54 innerhalb des Tanks 22, wobei die Rückführleitung 54 dort mit entsprechenden Austrittsdüsen 74, aus denen die zurückgeführte bzw. umgewälzte Spritzflüssigkeit in den Tank läuft, versehen ist.

Stromabwärts des Steuerventils 66 in der Rückführleitung 40 kann ein weiterer Drucksensor oder Durchflusssensor 75 vorgesehen sein, der zur Berechnung und Steuerung des Rezirkulationsgrads des Spritzmittels herangezogen werden kann.

Der Tank ist ferner mit einem Füllstandssensor 76 versehen, der ein entsprechendes Signal zum Füllstand des Tanks 22 liefert.

Sowohl die Fahrzeugsteuerung 60, die Steuerventile 64, 66, 68 die Teilbreitenventile 41, der Motor 46, die Drucksensoren bzw. Durchflusssensoren 70, 72, 75, der Füllstandssensor 76 als auch das Eingabemodul 62 sind über elektrische Steuerleitungen (in Figur 2 gestrichelt dargestellt) mit dem elektronischen Steuersystem 56 der Spritze 10 verbunden. Das Eingabemodul 62 fungiert dabei als zentrales Eingabemittel für eine die Spritze 10 bedienende Bedienperson. So können neben Steuerbefehlen für die einzelnen Komponenten, wie Steuerventile 64, 66, 68, Teilbreitenventile 41 und den die Pumpe 50 antreibenden Motor 46, auch Steuerdaten hinsichtlich des verwendeten Spritzmittels eingegeben oder aus einem in dem Eingabemodul 62 oder dem elektronischen Steuersystem 56 implementierten Speicher oder einer dort hinterlegten Datenbank abgerufen werden. So können fest eingespeicherte Steuerdaten mit dem von der Bedienperson gewähltem Spritzmittel hinsichtlich Vorgaben für Umwälzungsgrade und für Mischungsverhältnisse, Sedimentationsneigung etc. automatisch aufgerufen und von dem elektronischen Steuersystem 56 zu Steuerzwecken berücksichtigt werden. Ferner kann die gewünschte Ausbringrate an Spritzflüssigkeit eingegeben werden, die dann von dem elektronischen Steuersystem 56 in Abhängigkeit der Fahrgeschwindigkeit zur Berechnung der benötigten Durchflussraten bzw. der benötigten Förderrate der Pumpe 50 bzw. der benötigten Drehzahl des Motors 46 und zur Berechnung der Öffnungsgrades der Steuerventile 64, 66, 68 zu Grunde gelegt wird. Diesbezüglich werden von dem elektronischen Steuersystem 56 in Abhängigkeit der Fahrgeschwindigkeit (welche laufend an der Fahrzeugsteuerung 60 abgreifbar ist) sowie auch in Abhängigkeit anderer Steuergrößen, wie Durchflussrate in der Spritzleitung 32, Durchflussrate in der Rückführleitung 54, Durchflussrate in der Rückführleitung 40, Füllstand im Tank 22, sowie Betriebszustand der Teilbreiten 29, 29', 30, 30', entsprechende Steuersignale für den Motor und für die Steuerventile 64, 66, 68 bzw. für die Teilbreitenventile generiert. Ferner sind über das Eingabemodul 62 verschiedene Betriebsmodi wählbar, beispielsweise Tankfüllmodus, Spülmodus bzw. Reinigungsmodus oder Umwälzmodus bzw. Rezirkulationsmodus (beispielsweise für den Straßentransport) oder auch Außerbetriebsmodus, durch die von dem elektronischen Steuersystem 62 automatisch entsprechende Steuerfunktionen abgerufen und in entsprechende Steuersignale für die Drehzahl des Motors 46 und Öffnungs- oder Schließgrade für die Steuerventile 64, 66, 68 bzw. Teilbreitenventile 41 umgesetzt werden.

Das elektronische Steuersystem 56 ist derart ausgebildet, dass bei in Betrieb genommener Pumpe 50 und bei Stillstand der landwirtschaftlichen Feldspritze 10, also wenn die Fahrgeschwindigkeit Null beträgt, das in der Rückführleitung 54 vorgesehene Steuerventil 68 geöffnet und das in der Spritzleitung 32 vorgesehene Steuerventil 64 geschlossen wird und der elektrische Motor 46 der Pumpe 50 sowie die Steuerventile 64, 68, insbesondere das in der Rückführleitung vorgesehene Steuerventil 68, ferner in Abhängigkeit von der Art der Spritzflüssigkeit bzw. des Spritzmittels und/oder eines Füllstands des Tanks 22 und/oder eines einstellbaren Zeitintervalls angesteuert werden. Das elektronische Steuersystem 56 berücksichtigt dabei elektronische Steuersignale, die beispielsweise von den oben genannten Eingabemitteln 62 erzeugt werden, wobei eine Bedienperson beispielsweise die Art des verwendeten Spritzmittels oder auch ein Zeitintervall eingeben kann, woraufhin entsprechende Steuersignale, in Verbindung mit auf in den Eingabemitteln 62 oder in dem elektronischen Steuersystem 56 hinterlegten Daten, generiert werden. So können Pumpe 50 und Steuerventile 64, 66, 68 in Abhängigkeit der Fahrgeschwindigkeit betrieben bzw. angesteuert werden, also auch unter Berücksichtigung dessen, ob die landwirtschaftliche Feldspritze in Bewegung ist, und in Abhängigkeit anderer Faktoren wie Spritzmittelart, Füllstand des Tanks mit Spritzmittelflüssigkeit und Zeitangaben bzw. Zeitintervallangaben. So kann insbesondere der Umwälzvorgang optimal an das Spritzmittel angepasst werden.

Bei Beschleunigung der landwirtschaftlichen Feldspritze 10 wird das in der Spritzleitung 32 vorgesehene Steuerventil 64 in Abhängigkeit von der Beschleunigung geöffnet und der Motor 46 bei zunehmender oder abnehmender Fahrgeschwindigkeit mit zunehmender bzw. abnehmender Motordrehzahl betrieben. Dadurch wird ermöglicht, dass vorgegebene Ausbringraten an Spritzflüssigkeit in den verschiedenen Betriebszuständen genauestens eingehalten werden können, so dass bei zunehmender Geschwindigkeit der landwirtschaftlichen Feldspritze 10 das Steuerventil 64 in der Spritzleitung 32 zunehmend geöffnet wird und die Motordrehzahl und damit die Pumpleistung angehoben wird, um eine höhere Durchflussrate in der Spritzleitung 32 zu erzielen bzw. bei abnehmender Geschwindigkeit der landwirtschaftlichen Feldspritze 10 das Steuerventil 64 in der Spritzleitung 32 zunehmend geschlossen wird und die Motordrehzahl und damit die Pumpleistung abgesenkt wird, um die Durchflussrate in der Spritzleitung 32 zu reduzieren. Es ist dabei auch vorgesehen, dass wenn das Steuerventil 64 in der Spritzleitung 32 bereits vollständig geöffnet ist und die Fahrgeschwindigkeit weiter zunimmt, die Durchflussrate durch eine entsprechend der Zunahme Motordrehzahl und damit der Pumpleistung weiter erhöht werden kann.

Bei in der Spritzleitung 32 vollständig geöffnetem Steuerventil 64 kann das in der Rückführleitung 54 vorgesehene Steuerventil 68 ferner in Abhängigkeit der weiterhin zunehmenden oder abnehmenden Motordrehzahl geschlossen bzw. geöffnet werden, so dass auch bei weiterhin ansteigender oder abfallender Durchflussrate in der Spritzleitung 32 die Umwälzrate für die sich im Tank 22 befindliche Spritzflüssigkeit unabhängig davon gesteuert und beispielsweise konstant gehalten oder gar reduziert oder erhöht werden kann.

Ferner ist vorgesehen, dass in Abhängigkeit des Betriebszustands der Teilbreiten 29, 29', 30, 30' (Sektionen) der Motor 46 bei Zuschalten einer Teilbreite 29, 29', 30, 30' in seiner Drehzahl erhöht oder bei Abschalten einer Teilbreite 29, 29', 30, 30' in seiner Drehzahl reduziert wird. Dadurch kann die Durchflussrate in der Spritzleitung 32 entsprechend der außer Betrieb oder in Betrieb genommenen Teilbreiten 29, 29', 30, 30' des Spritzengestänges 20 reduziert bzw. erhöht werden.

Mittels der Rückführleitung 40 (Rezirkulationsleitung) wird die Spritzleitung 32 derart mit dem Tank 22 verbunden, dass eine Rückführung der durch die Spritzleitung 32 geführten Spritzflüssigkeit in den Tank 22 erfolgen kann, wobei ein Durchfluss von Spritzflüssigkeit durch die Rückführleitung 40 über das Steuerventil 66, gegebenenfalls auch in Abhängigkeit eines Steuersignals des Durchflusssensors 75, gesteuert wird, wobei der Motor 46 und die anderen Steuerventile 64, 68 ferner in Abhängigkeit des Durchflusses in der Rückführleitung 40 angesteuert werden können.

So sind Betriebsmodi wie z.B. Tankfüllmodus, Spülmodus, Spritzmodus, Umwälzmodus, Rezirkulationsmodus oder Außerbetriebsmodus wählbar, wobei den verschiedenen Betriebsmodi bestimmte voreinstellbare Steuergrößen für Drehzahl und Öffnungs- oder Schließgrad für die Steuerventile zugeordnet sind und die von dem elektronischen Steuersystem 56 automatisch in entsprechende Steuersignale umgesetzt werden.

Vorzugsweise sieht das Verfahren vor, dass bei Einstellen des Tankfüll- oder Spülmodus von dem elektronischen Steuersystem 56 ein voreinstellbarer Drehzahlwert für die Motordrehzahl vorgegeben und das in der Rückführleitung 54 vorgesehene Steuerventil 68 geschlossen wird und wobei das in der Spritzleitung 32 vorgesehene Steuerventil 64 zur Einstellung eines vorgebbaren Spüldrucks in der Spritzleitung 32 bzw. in dem Spritzengestänge 20 angesteuert wird, so dass beispielsweise der Spüldruck auch unterhalb eines Drucks gehalten wird, der die am Spritzengestänge angeordneten Spritzdüsen öffnen würde.

Der Schutzbereich, der die vorstehende Erfindung beschreibt, wird durch die folgenden Ansprüche definiert.

## Patentansprüche

1. Landwirtschaftliche Feldspritze (10) mit einem Tank (22), zur Aufnahme von Spritzflüssigkeit, einem Spritzengestänge (20) zum Ausbringen von Spritzflüssigkeit, wobei das Spritzengestänge (20) in mehrere Teilbreiten (29, 29', 30, 30') unterteilbar ist, die über Teilbreitenventile (41) wahlweise in einen zugeschalteten oder abgeschalteten Betriebszustand bringbar sind, einer Pumpe (50) zum Fördern von Spritzflüssigkeit, einer den Tank (22) mit der Pumpe (50) verbindenden Zuführleitung (52), einer die Pumpe (50) mit dem Tank (22) verbindenden Rückführleitung (54) und einer die Pumpe (50) mit dem Spritzengestänge (20) verbindenden Spritzleitung (32), wobei die Rückführleitung (54) und die Spritzleitung (32) jeweils mit wenigstens einem elektrisch ansteuerbaren Steuerventil (68, 64) versehen sind und ferner ein elektronisches Steuersystem (56) vorgesehen ist, **dadurch gekennzeichnet, dass** ein elektrischer Motor (46) zum Antreiben der Pumpe (50) vorgesehen ist und das elektronische Steuersystem derart ausgebildet ist, dass der Motor (46) und die Steuerventile (64, 68) in Abhängigkeit von der Fahrgeschwindigkeit der Feldspritze (10) und des Betriebszustands der Teilbreiten (29, 29', 30, 30') ansteuerbar sind, wobei der Motor (46) bei Zuschalten einer Teilbreite (29, 29', 30, 30') in seiner Drehzahl erhöht oder bei Abschalten einer Teilbreite (29, 29', 30, 30') in seiner Drehzahl reduziert wird.

2. Landwirtschaftliche Feldspritze (10) nach Anspruch 1,
**dadurch gekennzeichnet, dass** die Spritzleitung (32) mit einem Druck- und/oder Durchflusssensor (70) versehen ist und der Motor (46) und die Steuerventile (64, 68) ferner in Abhängigkeit von einem entsprechenden Druck- und/oder Durchflusssignal ansteuerbar sind.

3. Landwirtschaftliche Feldspritze (10) nach Anspruch 1 oder 2, **dadurch gekennzeichnet, dass** die Rückführleitung (54) mit einem Druck- und/oder Durchflusssensor (72) versehen ist und der Motor (46) und die Steuerventile (64, 68) ferner in Abhängigkeit von einem entsprechenden Druck- und/oder Durchflusssignal ansteuerbar sind.

4. Landwirtschaftliche Feldspritze (10) nach einem der Ansprüche 1 bis 3, **dadurch gekennzeichnet, dass** die Spritzleitung (32) mit einer weiteren Rückführleitung (40) verbindbar ist, durch welche die Spritzleitung (32) mit dem Tank (22) derart verbunden wird, dass eine Rückführung der durch die Spritzleitung (32) geführten Spritzflüssigkeit in den Tank (22) erfolgen kann, wobei ein Durchfluss von Spritzflüssigkeit durch die weitere Rückführleitung (40) über ein weiteres Steuerventil (66) steuerbar ist, und der Motor (46) und die Steuerventile (64, 66, 68) ferner in Abhängigkeit eines Drucks und/oder eines Durchflusses in der weiteren Rückführleitung (40) ansteuerbar sind.

5. Landwirtschaftliche Feldspritze (10) nach einem der Ansprüche 1 bis 4, **dadurch gekennzeichnet, dass** Eingabemittel (62) vorgesehen sind, durch welche mehrere einstellbare Betriebsmodi für das elektronische Steuersystem (56) einstellbar sind und der Motor (46) und die Steuerventile (41, 64, 66, 68) ferner in Abhängigkeit eines einstellbaren Betriebsmodus ansteuerbar sind.

6. Landwirtschaftliche Feldspritze (10) nach einem der Ansprüche 1 bis 5, **dadurch gekennzeichnet, dass** ein oder mehrere der Steuerventile (64, 66, 68) als verstellbare Drosselventile oder als Proportionalwegeventile ausgebildet sind.

7. Landwirtschaftliche Feldspritze (10) nach einem der Ansprüche 1 bis 6, **dadurch gekennzeichnet, dass** die Pumpe (50) unterhalb des Tanks (22) in einem hinteren Bereich der Spritze 10 angeordnet ist.

8. Verfahren zum Betreiben einer landwirtschaftlichen Feldspritze (10) mit einem Tank (22), zur Aufnahme von Spritzflüssigkeit, einem Spritzengestänge (20) zum Ausbringen von Spritzflüssigkeit, wobei das Spritzengestänge (20) in mehrere Teilbreiten (29, 29', 30, 30') unterteilbar ist, die durch Ansteuern von Teilbreitenventile (41) wahlweise in einen zugeschalteten oder abgeschalteten Betriebszustand gebracht werden, einer Pumpe (50) zum Fördern von Spritzflüssigkeit, einer den Tank (22) mit der Pumpe (50) verbindenden Zuführleitung (52), einer die Pumpe (50) mit dem Tank (22) verbindenden Rückführleitung (54) und einer die Pumpe (50) mit dem Spritzengestänge (20) verbindenden Spritzleitung (32), die Rückführleitung (54) und die Spritzleitung (32) jeweils mit wenigstens einem elektrisch ansteuerbaren Steuerventil (68, 64) versehen sind und ein elektronisches Steuersystem (56) vorgesehen ist, **dadurch gekennzeichnet, dass** ein elektrischer Motor (46) zum Antreiben der Pumpe (50) vorgesehen ist und der Motor (46) und die Steuerventile (64, 68) in Abhängigkeit von der Fahrgeschwindigkeit der Feldspritze (10) und des Betriebszustands der Teilbreiten (29, 29', 30, 30') ansteuerbar sind, wobei der Motor (46) bei Zuschalten einer Teilbreite (29, 29', 30, 30') in seiner Drehzahl erhöht oder bei Abschalten einer Teilbreite (29, 29', 30, 30') in seiner Drehzahl reduziert wird.

9. Verfahren nach Anspruch 8, **dadurch gekennzeichnet, dass** bei Stillstand der landwirtschaftlichen Feldspritze das in der Rückführleitung (54) vorgesehene Steuerventil (68) geöffnet und das in der Spritzleitung (32) vorgesehene Steuerventil (64) geschlossen ist und der Motor (46) ferner in Abhängigkeit von der Art der Spritzflüssigkeit und/oder eines Füllstands des Tanks (22) und/oder eines einstellbaren Zeitintervalls angesteuert wird.

10. Verfahren nach Anspruch 8, **dadurch gekennzeichnet, dass** bei Beschleunigung der landwirtschaftlichen Feldspritze (10) das in der Spritzleitung (32) vorgesehene Steuerventil (64) in Abhängigkeit von der Beschleunigung geöffnet wird und der Motor (46) bei zunehmender oder abnehmender Fahrgeschwindigkeit mit zunehmender bzw. abnehmender Motordrehzahl betrieben wird.

11. Verfahren nach Anspruch 10, **dadurch gekennzeichnet, dass** bei in der Spritzleitung (32) vollständig geöffnetem Steuerventil (64) das in der Rückführleitung (54) vorgesehene Steuerventil (68) ferner in Abhängigkeit der zunehmenden oder abnehmenden Motordrehzahl geschlossen bzw. geöffnet wird.

12. Verfahren nach einem der Ansprüche 8 bis 11, **dadurch gekennzeichnet, dass** die Spritzleitung (32) mit einer weiteren Rückführleitung (40) verbunden ist, durch welche die Spritzleitung (32) mit dem Tank (22) derart verbunden wird, dass eine Rückführung der durch die Spritzleitung (32) geführten Spritzflüssigkeit in den Tank (22) erfolgen kann, wobei ein Durchfluss von Spritzflüssigkeit durch die weitere Rückführleitung (40) über ein weiteres Steuerventil (66) gesteuert wird, wobei der Motor (46) und die Steuerventile (64, 66, 68) ferner in Abhängigkeit des Durchflusses in der weiteren Rückführleitung (40) angesteuert werden, wobei Eingabemittel (62) vorgesehen sind, durch welche mehrere einstellbare Betriebsmodi für das elektronische Steuersystem (56) einstellbar sind und wobei der Motor (46) und die Steuerventile (41, 64, 66, 68) ferner in Abhängigkeit eines einstellbaren Betriebsmodus ansteuerbar sind.

13. Verfahren nach Anspruch 12, **dadurch gekennzeichnet, dass** die Betriebsmodi einen Tankfüllmodus und/oder einen Spülmodus umfassen, wobei bei Einstellen des Tankfüll- oder Spülmodus von dem elektronischen Steuersystem (56) ein voreinstellbarer Drehzahlwert für die Motordrehzahl vorgegeben und das in der Rückführleitung (54) vorgesehene Steuerventil (66) geschlossen wird und wobei das in der Spritzleitung (32) vorgesehene Steuerventil zur Einstellung eines Spüldrucks in der Spritzleitung (32) bzw. in dem Spritzengestänge (20) angesteuert wird.

## Claims

1. Agricultural field sprayer (10) having a tank (22) for holding spray liquid, a spraying boom (20) for discharging spray liquid, wherein the spraying boom (20) is subdivisible into a plurality of part-widths (29, 29', 30, 30') which can be brought into a connected or disconnected operating state as desired via part-width valves (41), a pump (50) for delivering spray liquid, a supply line (52) that connects the tank (22) to the pump (50), a return line (54) that connects the pump (50) to the tank (22), and a spray line (32) that connects the pump (50) to the spraying boom (20), wherein the return line (54) and the spray line (32) are each provided with at least one electrically actuable control valve (68, 64) and furthermore an electronic control system (56) is provided, **characterized in that** an electric motor (46) for driving the pump (50) is provided and the electronic control system is configured such that the motor (46) and the control valves (64, 68) are actuable depending on the speed of travel of the field sprayer (10) and the operating state of the part-widths (29, 29', 30, 30'), wherein the speed of the motor (46) increases when a part-width (29, 29', 30, 30') is connected or decreases when a part-width (29, 29', 30, 30') is disconnected.

2. Agricultural field sprayer (10) according to Claim 1, **characterized in that** the spray line (32) is provided with a pressure and/or flow sensor (70) and the motor (46) and the control valves (64, 68) are furthermore actuable depending on a corresponding pressure and/or flow signal.

3. Agricultural field sprayer (10) according to Claim 1 or 2, **characterized in that** the return line (54) is provided with a pressure and/or flow sensor (72) and the motor (46) and the control valves (64, 68) are furthermore actuable depending on a corresponding pressure and/or flow signal.

4. Agricultural field sprayer (10) according to one of Claims 1 to 3, **characterized in that** the spray line (32) is connectable to a further return line (40), by which the spray line (32) is connected to the tank (22) such that the spray liquid passed through the spray line (32) can be returned into the tank (22), wherein a flow of spray liquid through the further return line (40) is controllable via a further control valve (66), and the motor (46) and the control valves (64, 66, 68) are furthermore actuable depending on a pressure and/or flow in the further return line (40).

5. Agricultural field sprayer (10) according to one of Claims 1 to 4, **characterized in that** there are provided input means (62) by way of which a plurality of settable operating modes for the electronic control system (56) are settable, and the motor (46) and the control valves (41, 64, 66, 68) are furthermore actuable depending on a settable operating mode.

6. Agricultural field sprayer (10) according to one of Claims 1 to 5, **characterized in that** one or more of the control valves (64, 66, 68) are configured as adjustable throttle valves or as proportional directional control valves.

7. Agricultural field sprayer (10) according to one of Claims 1 to 6, **characterized in that** the pump (50) is arranged beneath the tank (22) in a rear region of the sprayer (10).

8. Method for operating an agricultural field sprayer (10) having a tank (22) for holding spray liquid, a spraying boom (20) for discharging spray liquid, wherein the spraying boom (20) is subdivisible into a plurality of part-widths (29, 29', 30, 30') which are brought into a connected or disconnected operating state as desired by actuation of part-width valves (41), a pump (50) for delivering spray liquid, a supply line (52) that connects the tank (22) to the pump (50), a return line (54) that connects the pump (50) to the tank (22), and a spray line (32) that connects the pump (50) to the spraying boom (20), wherein the return line (54) and the spray line (32) are each provided with at least one electrically actuable control valve (68, 64) and an electronic control system (56) is provided, **characterized in that** an electric motor (46) for driving the pump (50) is provided and the motor (46) and the control valves (64, 68) are actuable depending on the speed of travel of the field sprayer (10) and the operating state of the part-widths (29, 29', 30, 30'), wherein the speed of the motor (46) increases when a part-width (29, 29', 30, 30') is connected or decreases when a part-width (29, 29', 30, 30') is disconnected.

9. Method according to Claim 8, **characterized in that**, with the agricultural field sprayer at a standstill, the control valve (68) provided in the return line (54) is opened and the control valve (64) provided in the spray line (32) is closed and the motor (46) is furthermore actuated depending on the type of spray liquid and/or on a filling level of the tank (22) and/or on a settable time interval.

10. Method according to Claim 8, **characterized in that**, when the agricultural field sprayer (10) is accelerated, the control valve (64) provided in the spray line (32) is opened depending on the acceleration and the motor (46) is operated at an increasing or decreasing motor speed as the speed of travel increases or decreases.

11. Method according to Claim 10, **characterized in that**, with the control valve (64) in the spray line (32) completely open, the control valve (68) provided in the return line (54) is furthermore closed or opened depending on the increasing or decreasing motor speed.

12. Method according to one of Claims 8 to 11, **characterized in that** the spray line (32) is connected to a further return line (40), by which the spray line (32) is connected to the tank (22) such that the spray liquid passed through the spray line (32) can be returned into the tank (22), wherein a flow of spray liquid through the further return line (40) is controlled via a further control valve (66), wherein the motor (46) and the control valves (64, 66, 68) are furthermore actuated depending on the flow in the further return line (40), wherein there are provided input means (62) by way of which a plurality of settable operating modes for the electronic control system (56) are settable, and wherein the motor (46) and the control valves (41, 64, 66, 68) are furthermore actuable depending on a settable operating mode.

13. Method according to Claim 12, **characterized in that** the operating modes comprise a tank filling mode and/or a flushing mode, wherein, when the tank filling or flushing mode is set by the electronic control system (56), a pre-settable speed value for the motor speed is specified and the control valve (66) provided in the return line (54) is closed, and wherein the control valve provided in the spray line (32) is actuated to set a flushing pressure in the spray line (32) or in the spraying boom (20).

## Revendications

1. Pulvérisateur agricole (10) comprenant un réservoir (22) pour recevoir du liquide à pulvériser, une tringlerie de pulvérisation (20) pour distribuer le liquide à pulvériser, la tringlerie de pulvérisation (20) pouvant être divisée en plusieurs largeurs partielles (29, 29', 30, 30') qui peuvent être amenées par le biais de soupapes de largeurs partielles (41) de manière sélective dans un état de fonctionnement connecté ou déconnecté, une pompe (50) pour refouler du liquide à pulvériser, une conduite d'alimentation (52) reliant le réservoir (22) à la pompe (50), une conduite de retour (54) reliant la pompe (50) au réservoir (22) et une conduite de pulvérisation (32) reliant la pompe (50) à la tringlerie de pulvérisation (20), la conduite de retour (54) et la conduite de pulvérisation (32) étant chacune pourvues d'au moins une soupape de commande (68, 64) à commande électrique, et un système de commande électronique (56) étant en outre prévu, **caractérisé en ce qu'**un moteur électrique (46) est prévu pour l'entraînement de la pompe (50) et le système de commande électronique est réalisé de telle sorte que le moteur (46) et les soupapes de commande (64, 68) puissent être commandés en fonction de la vitesse de conduite du pulvérisateur (10) et de l'état de fonctionnement des largeurs partielles (29, 29', 30, 30'), le moteur (46), lors de la connexion d'une largeur partielle (29, 29', 30, 30') augmentant son régime ou lors d'une déconnexion d'une largeur partielle (29, 29', 30, 30') diminuant son régime.

2. Pulvérisateur agricole (10) selon la revendication 1, **caractérisé en ce que** la conduite de pulvérisation (32) est pourvue d'un capteur de pression et/ou de débit (70) et le moteur (46) et les soupapes de commande (64, 68) peuvent en outre être commandés en fonction d'un signal de pression et/ou de débit correspondant.

3. Pulvérisateur agricole (10) selon la revendication 1 ou 2, **caractérisé en ce que** la conduite de retour (54) est pourvue d'un capteur de pression et/ou de débit (72) et le moteur (46) et les soupapes de commande (64, 68) peuvent en outre être commandés en fonction d'un signal de pression et/ou de débit correspondant.

4. Pulvérisateur agricole (10) selon l'une quelconque des revendications 1 à 3, **caractérisé en ce que** la conduite de pulvérisation (32) peut être connectée à une conduite de retour supplémentaire (40) par le biais de laquelle la conduite de pulvérisation (32) est reliée au réservoir (22) de telle sorte qu'un retour du liquide à pulvériser guidé à travers la conduite de pulvérisation (32) dans le réservoir (22) puisse avoir lieu, un débit de liquide à pulvériser à travers la conduite de retour supplémentaire (40) pouvant être commandé par le biais d'une soupape de commande supplémentaire (66), et le moteur (46) et les soupapes de commande (64, 66, 68) pouvant en outre être commandés en fonction d'une pression et/ou d'un débit dans la conduite de retour supplémentaire (40).

5. Pulvérisateur agricole (10) selon l'une quelconque des revendications 1 à 4, **caractérisé en ce que** des moyens d'entrée (62) sont prévus, lesquels permettent d'ajuster plusieurs modes de fonctionnement ajustables pour le système de commande électronique (56), et le moteur (46) et les soupapes de commande (41, 64, 66, 68) peuvent en outre être commandés en fonction d'un mode de fonctionnement ajustable.

6. Pulvérisateur agricole (10) selon l'une quelconque des revendications 1 à 5, **caractérisé en ce qu'**une ou plusieurs des soupapes de commande (64, 66, 68) sont réalisées sous forme de soupapes d'étranglement réglables ou sous forme de soupapes à plusieurs voies proportionnelles.

7. Pulvérisateur agricole (10) selon l'une quelconque des revendications 1 à 6, **caractérisé en ce que** la pompe (50) est disposée sous le réservoir (22) dans une région arrière du pulvérisateur (10).

8. Procédé pour faire fonctionner un pulvérisateur agricole (10) comprenant un réservoir (22) pour recevoir un liquide à pulvériser, une tringlerie de pulvérisation (20) pour distribuer le liquide à pulvériser, la tringlerie de pulvérisation (20) pouvant être divisée en plusieurs largeurs partielles (29, 29', 30, 30') qui peuvent être amenées par commande par des soupapes de largeurs partielles (41) de manière sélective dans un état de fonctionnement connecté ou déconnecté, une pompe (50) pour refouler du liquide à pulvériser, une conduite d'alimentation (52) reliant le réservoir (22) à la pompe (50), une conduite de retour (54) reliant la pompe (50) au réservoir (22) et une conduite de pulvérisation (32) reliant la pompe (50) à la tringlerie de pulvérisation (20), la conduite de retour (54) et la conduite de pulvérisation (32) étant chacune pourvues d'au moins une soupape de commande (68, 64) à commande électrique, et un système de commande électronique (56) étant en outre prévu, **caractérisé en ce qu'**un moteur électrique (46) est prévu pour l'entraînement de la pompe (50) et le moteur (46) et les soupapes de commande (64, 68) peuvent être commandés en fonction de la vitesse de conduite du pulvérisateur (10) et de l'état de fonctionnement des largeurs partielles (29, 29', 30, 30'), le moteur (46), lors de la connexion d'une largeur partielle (29, 29', 30, 30') augmentant son régime ou lors d'une déconnexion d'une largeur partielle (29, 29', 30, 30') diminuant son régime.

9. Procédé selon la revendication 8, **caractérisé en ce qu'**à l'arrêt du pulvérisateur agricole, la soupape de commande (68) prévue dans la conduite de retour (54) est ouverte et la soupape de commande (64) prévue dans la conduite de pulvérisation (32) est fermée et le moteur (46) est en outre commandé en fonction du type de liquide à pulvériser et/ou d'un niveau de remplissage du réservoir (22) et/ou d'un intervalle de temps ajustable.

10. Procédé selon la revendication 8, **caractérisé en ce que** lors de l'accélération du pulvérisateur agricole (10), la soupape de commande (64) prévue dans la conduite de pulvérisation (32) est ouverte en fonction de l'accélération et le moteur (46), en cas de vitesse de conduite croissante ou décroissante, étant entraîné avec un régime de moteur croissant ou décroissant.

11. Procédé selon la revendication 10, **caractérisé en ce que** dans le cas où la soupape de commande (64) dans la conduite de pulvérisation (32) est complètement ouverte, la soupape de commande (68) prévue dans la conduite de retour (54) est en outre fermée ou ouverte en fonction du régime du moteur croissant ou décroissant.

12. Procédé selon l'une quelconque des revendications 8 à 11, **caractérisé en ce que** la conduite de pulvérisation (32) est connectée à une conduite de retour supplémentaire (40) par le biais de laquelle la conduite de pulvérisation (32) est connectée au réservoir (22) de telle sorte qu'un retour du liquide à pulvériser guidé à travers la conduite de pulvérisation (32) dans le réservoir (22) puisse avoir lieu, un débit de liquide à pulvériser à travers la conduite de retour supplémentaire (40) étant commandé par une soupape de commande supplémentaire (66), le moteur (46) et les soupapes de commande (64, 66, 68) étant commandés en outre en fonction du débit dans la conduite de retour supplémentaire (40), des moyens d'entrée (62) étant prévus, lesquels permettent d'ajuster plusieurs modes de fonctionnement ajustables pour le système de commande électronique (56), et le moteur (46) et les soupapes de commande (41, 64, 66, 68) pouvant en outre être commandés en fonction d'un mode de fonctionnement ajustable.

13. Procédé selon la revendication 12, **caractérisé en ce que** les modes de fonctionnement comprennent un mode de remplissage du réservoir et/ou un mode de rinçage, lors de l'ajustement du mode de remplissage du réservoir ou du mode de rinçage par un système de commande électronique (56), une valeur de régime préajustable pour le régime du moteur étant prédéfinie et la soupape de commande (66) prévue dans la conduite de retour (54) étant fermée et la soupape de commande prévue dans la conduite de pulvérisation (32) étant commandée pour l'ajustement d'une pression de rinçage dans la conduite de pulvérisation (32) ou dans la tringlerie de pulvérisation (20).
